(19) Europäisches Patentamt
European Patent Office
Office européen des brevets

(11) Veröffentlichungsnummer: **0 018 535**
**B1**

(12) **EUROPÄISCHE PATENTSCHRIFT**

(45) Veröffentlichungstag der Patentschrift: **22.06.83**

(51) Int. Cl.³: **H 01 S 3/097**

(21) Anmeldenummer: **80102008.2**

(22) Anmeldetag: **15.04.80**

(54) Verfahren zur Erzeugung eines laseraktiven Zustandes in einer Gasströmung.

(30) Priorität: **04.05.79 DE 2917995**

(43) Veröffentlichungstag der Anmeldung:
**12.11.80 Patentblatt 80/23**

(45) Bekanntmachung des Hinweises auf die Patenterteilung:
**22.06.83 Patentblatt 83/25**

(84) Benannte Vertragsstaaten:
**BE CH FR GB IT LI**

(56) Entgegenhaltungen:
EP - A - 0 003 280
US - A - 3 748 594

IEEE JOURNAL OF QUANTUM ELECTRONICS,
Vol. QE—8, No. 8, August 1972 NEW YORK
(US) D.B. NICHOLS und W.M. BRANDENBERG:
Radio Frequency Preionization in a Supersonic
Transverse Electrical Discharge Laser" Seiten
718—719

(73) Patentinhaber: **Deutsche Forschungs- und
Versuchsanstalt für Luft- und Raumfahrt e.V.
D-5300 Bonn (DE)**

(72) Erfinder: **Schock, Wolfram, Dr. Ing.
Max-Liebermann-Weg 14
D-7032 Sindelfingen (DE)**
Erfinder: **Schall, Wolfgang, Dipl.-Ing.
Hölderlinstrasse 9
D-7022 Leinf.-Echterdingen-1 (DE)**
Erfinder: **Hügel, Helmut, Dr. Ing.
Esseggerstrasse 22
D-7032 Sindelfingen (DE)**
Erfinder: **Hoffmann, Peter, Dipl.-Phys.
Im Betzengaiern 9
D-7000 Stuttgart 70 (DE)**

(74) Vertreter: **Hoeger, Stellrecht & Partner
Uhlandstrasse 14 c
D-7000 Stuttgart 1 (DE)**

(56) Entgegenhaltungen:

JOURNAL OF APPLIED OPTICS, Vol. 45, No. 9, September 1974 NEW YORK (US) J.A. SHIRLEY et al.: "Stimulated emission from carbon monoxide transitions below 5 um excited in supersonic electric discharge" Seiten 3934—3935

APPLIED PHYSICS LETTERS, Vol. 32, No. 10, Mai 1978 NEW YORK (US) J.L. LACHAMBRE et al.: "A Transversely rf-excited CO2 waveguide laser" Seiten 652—653

SOV. J. OF QUANTUM ELECTRONICS, Vol. 9, No. 3, März 1979 NEW YORK (US) V.D. GAVRILYUK et al.: "Characteristics of a CO2 laser excited by a capacitive ac discharge" Seiten 326—328

## Verfahren zur Erzeugung eines laseraktiven Zustandes in einer Gasströmung

Die Erfindung betrifft ein Verfahren zur Erzeugung eines laseraktiven Zustandes in einer Gasströmung, wobei das Gas mit Überschallgeschwindigkeit zwischen zwei Elektroden hindurchströmt und durch Anlegen einer Spannung zwischen den Elektroden eine Glimmentladung quer zur Strömungsrichtung unterhalten wird.

Es sind gasdynamische Laser bekannt, bei denen eine Inversion des laseraktiven Gases durch Anregung des Gases mittels einer Glimmentladung und durch Abkühlung des Gases auf tiefe Temperaturen, beispielsweise auf Temperaturen von 50 K, erreicht werden kann. Ein Beispiel für einen solchen gasdynamischen Laser ist ein CO-Laser.

Grundsätzlich ist es möglich, die tiefe Temperatur des Gases durch kryogene Kühlung zu erreichen und in dem derart abgekühlten Gas eine Glimmentladung zu unterhalten. Nachteilig ist dabei jedoch, daß auf diese Weise eine räumlich gleichmäßige Kühlung des Gases nicht erreicht werden kann und daß aus diesem Grunde der Querschnitt eines entsprechenden Gasentladungsgefäßes gering gewählt werden muß. Zur Steigerung der Leistung eines solchen Lasers muß die Länge des Lasergefäßes erhöht werden. Bei hoher Laserleistung gelangt man hierbei rasch an technische und wirtschaftliche Grenzen. Darüber hinaus ist die kryogene Kühlung zur Erreichung tiefer Temperaturen äußerst aufwendig.

Die tiefen Temperaturen des Gases lassen sich besser durch eine Überschallexpansion des Lasergases erreichen. Zu diesem Zweck wird das betreffende Gas durch eine Lavaldüse expandiert und erreicht infolge der Expansion Überschallgeschwindigkeit. Dabei erhält man die gewünschte Abkühlung des Gases.

Die Glimmentladung zur Anregung der Schwingungszustände des Gases kann im Gebiet vor der Expansionsdüse, also in einem Bereich hohen Druckes und hoher Temperatur unterhalten werden. Die Höhe des Druckes in diesem Bereich ist jedoch durch das Auftreten von Entladungsinstabilitäten begrenzt, so daß die erzielbaren Drücke in der nachfolgenden Überschallströmung, in der der Lasereffekt auftritt, auf geringe Werte beschränkt sind, beispielsweise auf Werte unter 10 Millibar. Dadurch kann eine anschließende Verdichtung des laseraktiven Gases in einem Diffusor zum Zwecke des Ausstoßes bei Umgebungsdruck nicht stattfinden.

Es ist daher bereits bekannt, die Glimmentladung im Bereich der Überschallströmung zu betreiben. Hierbei treten aber durch die physikalischen Eigenschaften einer Überschallströmung äußerst schwierige Bedingungen für den Betrieb einer Glimmentladung auf, so daß es in der Praxis bis heute nicht gelungen ist, eine kontinuierliche Anregung des Lasergases über einen längeren Zeitraum hinweg mit der erwünschten hohen Leistungsdichte zu erzielen.

In Überschallströmungen ergibt sich die Schwierigkeit, daß durch die gerichtete hohe Geschwindigkeit des neutralen Gaes die elektrische Stromverteilung in Strömungsrichtung verschleppt wird, und zwar über Entfernungen bis zu einigen Metern. Außerdem verläuft die Entladung bevorzugt innerhalb der warmen Grenzschicht der Kanalwände. Diese beiden Effekte führen gemeinsam dazu, daß in einem Bereich zwischen seitlich an der Kanalwand angeordneten Elektroden keine gleichmäßige Anregung erfolgen kann.

Um eine hohe Effizienz der Schwingungsanregung zu erreichen, muß im Bereich der Glimmentladung die Zahl der Ladungsträger hoch sein. Dies bedingt eine hohe Stromdichte, die eine hohe elektrische Feldstärke voraussetzt. Dabei besteht die Schwierigkeit, daß die Glimmin eine Bogenentladung umschlägt. Andererseits erhält man eine optimale Vibrationsanregung des Molekülgases bei Anlegen einer niedrigen elektrischen Feldstärke, d.h. einer Feldstärke, die unterhalb derjenigen einer selbständigen Glimmentladung liegt. Dadurch wird aber wieder die Produktion von Ladungsträgern herabgesetzt.

Die Schwierigkeiten zur Anregung eines Molekülgases mittels einer Glimmentladung im Bereich einer Überschallströmung sind also äußerst vielfältiger Natur. Es sind eine Reihe von Verfahren bekannt geworden, mit denen diese Schwierigkeiten überwunden werden sollen.

Bei einem solchen Verfahren wird eine unselbständige Gleichstromentladung, die quer zur Strömungsrichtung unterhalten wird, mit einer Elektronenkanone kombiniert, die unabhängig von der Gleichstromentladung Ladungsträger erzeugt (M.M. Mann, SPIE Vol. 76 (1976). S. 59). Nachteilig ist dabei insbesondere, daß die Trennfolie zwischen Elektronenkanone und Entladungskanal durch den durch sie hindurchgerichteten Elektronenstrahl stark erwärmt wird und daß daher zur Vermeidung einer Zerstörung nur kurze Betriebszeiten möglich sind. Außerdem ist ein großer apparativer Aufwand für den Betrieb der Elektronenkanone notwendig.

Anstelle der Elektronenkanone hat man auch bereits Hochspannungsimpulse kurzer Dauer und hoher Repetitionsrate zur Ionisation verwendet (D.J. Monson, G. Srinivasan, Appl. Phys. Lett. 31 (12), 15. Dez. 1977, S. 828). Bei diesem Verfahren ist ebenfalls ein hoher apparativer Aufwand nötig, da zusätzlich zu den Vorrichtungen für eine Gleichstrom-Glimmentladung eine Hochspannungsquelle zur Erzeugung von Impulsen hoher Repetitionsrate vorgesehen sein muß.

Um den Schwierigkeiten der Stromverschleppung zu begegnen, ist es auch bereits bekannt, die Anregung mittels einer als Längsentladung betriebenen Hochfrequenzentladung verzunehmen. Die Entladung erfolgt dabei zwischen der als Elektrode wirkenden Expansionsdüse einerseits und stromabwärts gelegenen Elektroden in den Kanalwänden (J.A. Shirley, R.J. Hall, B.R. Bronfin, Journal of Appl. Phys., Vol. 45, Nr. 9, Sept. 1974, S. 3934). Es hat sich jedoch herausgestellt, daß bei einem solchen Betrieb die Hochfrequenzentladung im wesentlichen in den wärmeren Grenzschichten des Gefäßes konzentriert ist, so daß auch bei diesem Verfahren eine gleichmäßige Anregung des gesamten Volumens nicht möglich ist.

Der Erfindung liegt die Aufgabe zugrunde, eine Verfahren zur Anregung eines Molekülgases in einer Überschallströmung anzugeben, mit welchem das Gas mit hoher Leistungsdichte kontinuierlich über einen längeren Zeitraum und über den Querschnitt der Strömung möglichst gleichmäßig angeregt werden kann.

Diese Aufgabe wird bei einem Verfahren der eingangs beschriebenen Art erfindungsgemäß dadurch gelöst, daß man eine alternierende Hochfrequenzspannung zwischen $10^5$ und $10^7$ Hz zur Erzeugung der Glimmentladung an die Elektroden anlegt, daß man die Scheitelspannung derart wählt, daß im Raum zwischen den Elektroden eine Elektronendichte von mindestens $10^{11}$ Elektronen/cm$^3$ vorliegt, und daß in einem Teil einer Schwingungsperiode die Spannung unter einer zur Aufrechterhaltung einer selbständigen Glimmentladung notwendigen Spannung liegt und von Null verschieden ist.

Es ist bereits ein Verfahren zur Anregung eines Gases bekannt, welches mit Unterschallgeschwindigkeit durch einen Resonator strömt (US—Patentschrift 3 748 594). Im Rahmen dieser Druckschrift ist das Gebiet der Strömungsgeschwindigkeiten zwischen 0,1 und 1 Mach untersucht worden. Dabei hat es sich herausgestellt, daß die Wirksamkeit der Entladung zur Gasanregung mit zunehmender Mach-Zahl zunächst ansteigt, ab einer Mach-Zahl von etwa 0,5 jedoch wieder ganz erheblich abnimmt; optimale Wirksamkeit der Gasentladung wurde bei Mach-Zahlen von etwa 0,5 festgestellt. Dagegen war der Betrieb in der Nähe der Mach-Zahl 1 auf einen ganz engen Druckbereich konzentriert.

Aufgrund dieser Untersuchungen mußte für den Fachmann der Eindruck entstehen, daß das in der US—Patentschrift 3 748 594 beschriebene Anregungsverfahren nur im Unterschallbereich effektiv benutzt werden kann, daß aber eine Steigerung der Strömungsgeschwindigkeit über den Bereich von Mach 1 zu einer totalen Unwirksamkeit dieses Verfahrens führen mußte.

Überraschenderweise hat sich jedoch herausgestellt, daß bei einem derartigen Betrieb trotz der bei einer Überschallströmung auftretenden Schwierigkeiten eine effektive und im Volumen gleichmäßige Anregung des Molekülgases erreicht werden kann. Dabei werden durch die Spannungsspitzen der an die Elektroden angelegten Hochfrequenzspannung Ladungsträger in hoher Konzentration erzeugt, die in den Zeiträumen, in denen eine geringere Spannung an den Elektroden anliegt, die optimale Anregungsenergie erhalten. Dadurch ergibt sich gegenüber allen bekannten Verfahren, daß beide Aufgaben mit einer einzigen Entladung gelöst werden können.

Ein weiterer Vorteil des erfindungsgemäßen Verfahrens liegt darin, daß durch die Umpolung der Spannung die wärmeerzeugenden Bereiche der Glimmentladung abwechselnd an der einen und an der anderen Seite des Gasgefäßes angeordnet sind. Dadurch kann eine übermäßige Erwärmung der für die Entladung kritischen Randbereiche verringert werden.

Technisch besonders einfach ist es, wenn die Hochfrequenzspannung einen sinusförmigen Verlauf hat.

Ein wesentlicher weiterer Vorteil ergibt sich, wenn segmentierte Elektroden verwendet werden. Weist die Hochfrequenzspannung keinen Gleichspannungsanteil auf, kann anstelle einer ohmschen Entkopplung der Elektrodensegmente untereinander eine wirkleistungslose kapazitive Entkopplung angewandt werden. Die kapazitive Spannung kann durch eine Induktivität nach Art eines Reihenschwingkreises kompensiert werden. Auf diese Weise ergeben sich gegenüber einer ohmschen Stabilisierung Energieeinsparungen bis zu 40%.

An sich ist die Verwendung von querverlaufenden Hochfrequenzentladungen zur Anregung eines Molekülgases bereits bekannt, jedoch nur bei Unterschallströmungen. Unterschallströmungen wiesen gegenüber den hier behandelten Überschallströmungen jedoch physikalisch so grundlegende Unterschiede auf, daß der Fachmann nicht erwarten konnte, daß die bekannten Schwierigkeiten beim Betreiben einer Glimmentladung in einer Überschallströmung durch Verwendung einer querverlaufenden Hochfrequenzanregung überwunden werden konnten. Die jahrelangen, vergeblichen Versuche der Fachleute auf dem Gebiet der Anregung in Überschallströmungen zeigen deutlich, daß man hier grundsätzlich davon ausging, daß besondere, spezifische Lösungsmöglichkeiten gesucht werden müssen. Darüber hinaus kommt der querverlaufenden Hochfrequenzanregung in Unterschallströmungen bei bekannten Verfahren auch eine vollständig andere Aufgabe zu. So dient die Hochfrequenzentladung bei einem bekannten Verfahren im wesentlichen zur Homogenisierung der Gleichstromhauptentladung (A.C. Eckbreth, J.W. Davis, Appl. Phys. Lett., Vol. 21, Nr. 1, 1. Juli 1972, S. 25, C.O. Brown, J.W. Davis, Appl. Phys. Lett., Vol. 21, Nr. 10, 15. Nov. 1972, S. 480). Die Hochfrequenzentladung hat bei diesem Verfahren nicht die Aufgabe, gleichzeitig die Ladungsträger zu erzeugen und die Anregung des Gases zu bewirken, wie dies bei der Hochfrequenzentladung der vorliegenden Erfindung der Fall ist. Es wird vielmehr durch die zusätliche Hochfrequenzentladung bei dieser Unterschallströmung eine Modulation des Gleichfeldes der Gleichstromentladung bewirkt, um instabile Vorgänge in der Gleichstromentladung auszuschalten. Bei einem anderen Verfahren werden — in diesem Falle allerdings niederfrequente — Wechselstromentladungen einer Unterschallströmung überlagert (V.D. Gavrilyuk, A.F. Glova, V.S. Golubev, F.V. Lebedev, Sov. J. Quantum Electron. 7 (9), Sept. 1977, S. 1164). Diese Verfahren sind daher mit der Hochfrequenzanregung eines mit überschallgeschwindigkeit strömenden Gases nicht vergleichbar.

Die nachfolgende Beschreibung einer Vorrichtung zur Durchführung des erfindungsgemäßen Verfahrens und bevorzugter Ausführungsformen des erfindungsgemäßen Verfahrens dient zusammen mit der Zeichnung der näheren Erläuterung. Es zeigen:

Fig. 1 eine schematische Seitenansicht einer Vorrichtung zur Durchführung des erfindungsgemäßen Verfahrens und

Fig. 2 eine vergrößerte Draufsicht auf eine mehrteilig ausgebildete Elektrode.

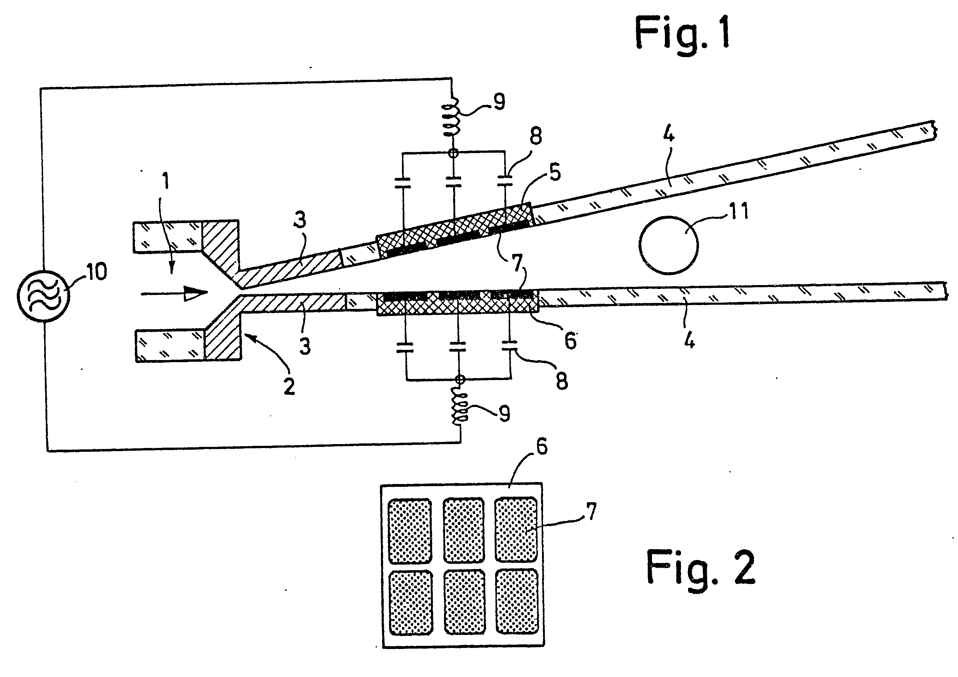

Die in Fig. 1 dargestellte Vorrichtung umfaßt einen Hochdruckbereich 1, an den sich eine Überschalldüse 2 mit keilförmig auseinanderlaufenden Seitenwänden 3 anschließt. Die Seitenwände 3 setzen sich gradlinig in Kanalwänden 4 fort, so daß sich insgesamt ein keilförmig erweiternder Kanal ergibt. In die Kanalwände 4 sind im Bereich hinter der Überschalldüse 2 einander gegenüberliegend zwei Elektrodenhalter 5 und 6 eingesetzt, und zwar derart, daß ihre dem Kanal zugewandte Innenfläche mit der Innenfläche der Kanalwände 4 fluchtet. Die Elektrodenhalter bestehen aus Keramik und nehmen jeweils sechs Elektroden 7 auf, wie sich insbesondere aus Fig. 2 ergibt. Die Elektroden bestehen vorzugsweise aus Materialien, die eine geringe Sputterneigung aufweisen, z.B. aus Aluminium. Zur Erzielung eines homogenen Entladungsansatzes wird zweckmäßigerweise die Elektrodenoberfläche aufgerauht, z.B. durch Sandstrahlen. Die Kanten der Elektroden sind auf der der Entladung zugewandten Seite abgerundet. Die Elektrodensegmente sind durch eine wärmebeständige, kohlenstofffreie Isoliermasse, vorzugsweise durch Keramik, getrennt, wobei diese die Segmentoberflächen teilweise bedecken kann. Die Elektroden können gekühlt sein.

In einer bevorzugten Ausgestaltung der Erfindung sind die Elektroden ganz oder teilweise in einer leicht vom Kanal abtrennbaren Halterung gefaßt. Damit ist ein rasches Auswechseln der Elektroden möglich.

Jedes Elektrodensegment ist über einen eigenen Kondensator 8 mit einem Ende einer Induktivität 9 verbunden, deren anderes Ende jeweils mit einem Ausgang einer Hochfrequenzspannungsquelle 10 in Verbindung steht. Die Induktivitäten 9 kompensieren die kapazitive Last der Kondensatoren 8 nach Art eines Reihenschwingkreises.

Im stromabwärts von den Elektroden gelegenen Bereich des Kanales ist ein Laserresonator 11 angeordnet, mittels welchem die Laserleistung ausgekoppelt werden kann.

Im Betrieb der erfindungsgemäßen Anordnung wird das anzuregende Gas, beispielsweise eine Gasmischung, die CO, $CO_2$, NO oder Wasserstoffhalogenide enthält, in den Hochdruckbereich 1 eingeführt und beim Durchtritt durch die Überschalldüse 2 auf Überschallgeschwindigkeit beschleunigt. Beispielsweise könnte die Geschwindigkeit eines CO/He-Gemisches bei 1000 m/s liegen. An die Elektroden wird eine Hochfrequenzspannung mit einer Frequenz zwischen $10^5$ und $10^7$ Hz angelegt. Deren Scheitelspannung ist dabei so gewählt, daß im Raum zwischen den Elektroden eine Elektronendichte von mindestens $10^{11}$ Elektronen/$cm^3$ erzeugt wird. Vorzugsweise ist der Spannungsverlauf symmetrisch zur Nullinie, so daß kein Gleichstromanteil auftritt. Dies erlaubt bei der Entkopplung der einzelnen Elektrodensegmente durch die Kondensatoren 8 und die Kompensation durch die Induktivitäten 9 einen sparsameren Gebrauch gegenüber dem Betrieb mit vergleichbaren Ohmschen Widerständen. Bei einem von den Erfindern durchgeführten Versuch wurde ein CO/He-Gemisch mit einer Geschwindigkeit von 1000 m/s zwischen den Elektroden hindurchgeleitet, die einen Abstand von 2,5 cm und eine Länge von etwa 12 cm aufwiesen. Die an die Elektroden angelegte Hochfrequenzspannung hatte eine Frequenz von 1 MHz. Die bei einer solchen Entladung erzielte Leistungsdichte $N_{sp}$ >100 $W/cm^3$ ermöglicht den Betrieb eines Infrarotlasers bei einer Welenlänge von 5 Mikrometer.

Infolge des hohen Druckes in der Überschallströmung ist es bei der gewählten Anordnung möglich, durch Druckrückgewinn in einem nachgeschalteten Diffusor die Gase gegen Atmosphäre auszublasen. Andererseits erfordern zahlreiche Laseranwendungen, daß das Lasergas in einem geschlossenen Gaskreislauf geführt wird. Dies wird bei dem beschriebenen Verfahren vorteilhaft ermöglicht, da das insgesamt hohe Druckniveau die Verwendung kleinvolumiger Pumpen gestattet.

**Patentansprüche**

1. Verfahren zur Erzeugung eines laseraktiven Zustandes in einer Gasströmung, wobei das Gas mit Überschallgeschwindigkeit zwischen zwei Elektroden hindurchströmt und durch Anlegen einer Spannung zwischen den Elektroden eine Glimmentladung quer zur Strömungsrichtung unterhalten wird, dadurch gekennzeichnet, daß man eine alternierende Hochfrequenzspannung mit einer Frequenz zwischen $10^5$ und $10^7$ Hz zur Erzeugung der Glimmentladung an die Elektroden anlegt, daß man deren Scheitelspannung derart wählt, daß im Raum zwischen den Elektroden eine Elektronendichte

von mindestens $10^{11}$ Elektronen/cm³ vorliegt, und daß in einem Teil einer Schwingungsperiode die Spannung unter einer zur Aufrechterhaltung einer selbständigen Glimmentladung notwendigen Spannung liegt und von Null verschieden ist.

2. Verfahren nach Anspruch 1, dadurch gekennzeichnet, daß die Halbwellen der Hochfrequenzspannung symmetrisch zur Nullinie sind.

3. Verfahren nach Anspruch 2, dadurch gekennzeichnet daß die Hochfrequenzspannung sinusförmig ist.

## Revendications

1. Procédé pour créer un état actif laser dans un écoulement gazeux, selon lequel on fait passer le gaz à vitesse supersonique entre deux électrodes et on maintient un effluve électrique transversalement à la direction d'écoulement par application d'une tension entre les électrodes, caractérisé en ce que l'on applique aux électrodes une tension alternative de haute fréquence, entre $10^5$ et $10^7$ Hz, pour produire l'effluve, on choisit la tension de crête de manière que la densité d'électrons dans l'espace entre les électrodes soit d'au moins $10^{11}$ électrons/cm³ et on fait en sorte que, dans une partie de période, la tension possède une valeur non nulle inférieure à celle nécessaire au maintien d'un effluve autonome.

2. Procédé selon la revendication 1, caractérisé en ce que les demi-ondes de la tension de haute fréquence sont symétriques par rapport à la ligne de zéro.

3. Procédé selon la revendication 2, caractérisé en ce que la tension de haute fréquence est sinusoïdale.

## Claims

1. Method for generating a laser-active state in a gas stream, the gas flowing through at supersonic speed between two electrodes and, by applying a voltage between the electrodes, a glow discharge being maintained transversely to the direction of flow, characterized in that an alternating high-frequency voltage having a frequency between $10^5$ and $10^7$ Hz is applied to the electrodes for generating the glow discharge, in that its peak voltage is selected such that in the space between the electrodes an electron density of at least $10^{11}$ electrons/cm³ exists, and in that part of a period of oscillation the voltage lies below a voltage necessary for maintaining an independent glow discharge and differs from zero.

2. Method according to claim 1, characterized in that the half waves of the high-frequency voltage are symmetrical to the zero line.

3. Method according to claim 2, characterized in that the high-frequency voltage is sinusoidal.

Fig.1

Fig.2